# EUROPEAN PATENT APPLICATION

(11) **EP 4 617 481 A1**
(43) Date of publication of application: **17.09.2025**
(21) Application number: 25162936.6
(22) Date of filing: 11.03.2025
(51) Int. Cl.: F02C 3/22, F02C 7/224, F02C 9/40, F17C 7/02

(54) **LIQUID HYDROGEN FUEL SYSTEM WITH THERMAL COMPRESSION**

(30) Priority: 12.03.2024 US 202418602157
(71) Applicant: RTX Corporation, Farmington, CT 06032 (US)
(72) Inventor: TAYLOR, Stephen, Farmington 06032 (US); MANDEL, Raphael, Farmington 06032 (US)
(74) Representative: Dehns

(57) **Abstract**

A fuel delivery system (74) for an aircraft turbine engine assembly includes a storage tank (76) that is configured for storage of a cryogenic fuel in a liquid phase, at least one thermal compression tank (78) where liquid fuel from the storage tank (76) is pressurized by exposure to thermal energy to elevate a pressure of the liquid fuel, a heat communication device (136) that is in thermal communication with the thermal compression tank (78) for communicating thermal energy to the liquid fuel within the thermal compression tank (78), a valve system (92) for controlling the flow of pressurized liquid fuel into and out of the thermal compression tank (78), and a controller (100) that is programmed to operate the valve system (92) to release pressurized liquid fuel from the thermal compression tank (78) into a conduit for communication to a combustor (56).

## Description

### TECHNICAL FIELD

The present invention relates generally to a fuel system for a cryogenic fuel and more specifically to a fuel system that utilizes thermal compression to pressurize cryogenic fuel for introduction into a combustor.

### BACKGROUND

A gas turbine engine operates by compressing air within a compressor section, delivering the compressed air to a combustion section where it is mixed with fuel and ignited to generate a high-energy exhaust gas flow that is used to drive a turbine section. Alternate fuels such as liquid hydrogen and other cryogenic fuels are being considered for use in turbine engines to reduce reliance on hydrocarbon based fuels. Maintaining hydrogen in liquid form requires extreme low temperatures. The low temperature requirements of cryogenic fuels may not be compatible with traditional fuel system components used to pressurize fuel for introduction into the combustor.

### SUMMARY

According to an aspect of the present invention, there is provided a fuel delivery system for an aircraft turbine engine assembly, the fuel delivery system includes, among other possible things, a storage tank that is configured for storage of a cryogenic fuel in a liquid phase, at least one thermal compression tank where liquid fuel from the fuel storage tank is pressurized by exposure to thermal energy to elevate a pressure of the liquid fuel, a heat communication device that is in thermal communication (or thermal contact) with the thermal compression tank for communicating thermal energy to the liquid fuel within the thermal compression tank, a valve system for controlling the flow of pressurized liquid fuel into and out of the thermal compression tank, and a controller that is programmed to operate the valve system to release pressurized liquid fuel from the thermal compression tank into a conduit for communication to a combustor.

Optionally, and in accordance with the above, the controller is further programmed to operate the valve system to seal the liquid fuel within the thermal compression tank for pressurizing the liquid fuel.

Optionally, and in accordance with any of the above, the fuel delivery system further includes a heat exchanger that is downstream of the thermal compression tank where thermal energy is provided to transform the pressurized liquid fuel into a gas.

Optionally, and in accordance with any of the above, the at least one thermal compression tank includes multiple thermal compression tanks and the valve system includes a switching valve for controlling the flow of pressurized liquid fuel from each of the multiple thermal compression tanks.

Optionally, and in accordance with any of the above, the controller is further programmed to fill, pressurize, and empty each of the multiple thermal compression tanks in sequence to maintain a flow of pressurized liquid fuel through to the combustor.

Optionally, and in accordance with any of the above, the thermal compression tank includes a gas outlet where vaporized fuel generated during heating of the liquid fuel is exhausted and communicated to the combustor or to the main fuel tank.

Optionally, and in accordance with any of the above, the thermal compression tank is in thermal communication (or thermal contact) with the main storage tank to cool the thermal compression tank after the pressurized liquid fuel is extracted from the thermal compression tank.

Optionally, and in accordance with any of the above, the fuel delivery system further includes a cooling system to cool the thermal compression tank after the pressurized liquid fuel is extracted from the thermal compression tank.

Optionally, and in accordance with any of the above, the fuel delivery system further includes an intermediate loop with a working fluid that is in thermal communication (or thermal contact) with the thermal compression tank. The working fluid is heated by a heat source and communicates the thermal energy to the liquid fuel within the thermal compression tank.

According to another aspect of the present invention, there is provided a turbine engine assembly for an aircraft that includes, among other possible things a core engine that includes a propulsor, a compressor section where an inlet airflow is compressed and communicated to a combustor where fuel is mixed with the compressed inlet airflow and ignited to generate an exhaust gas flow that is expanded through a turbine section to drive the propulsor and the compressor section, a storage tank that is configured for storage of a cryogenic fuel in a liquid phase, at least one thermal compression tank where liquid fuel from the fuel storage tank is pressurized by exposure to thermal energy to elevate a pressure of the liquid fuel, a heat communication device that is in thermal communication (or thermal contact) with the thermal compression tank for communicating thermal energy to the liquid fuel within the thermal compression tank, a valve system for controlling the flow of pressurized liquid fuel into and out of the thermal compression tank, and a controller that is programmed to operate the valve system to release pressurized liquid fuel from the thermal compression tank into a conduit for communication to the combustor.

Optionally, and in accordance with any of the above, the turbine engine assembly further includes a heat exchanger that is downstream of the thermal compression tank where thermal energy is provided to transform the pressurized liquid fuel into a gas before being communicated to the combustor.

Optionally, and in accordance with any of the above, the at least one thermal compression tank includes multiple thermal compression tanks and the valve system includes a switching valve for controlling the flow of pressurized liquid fuel from each of the multiple thermal compression tanks.

Optionally, and in accordance with any of the above, the controller is further programmed to fill, pressurize, and empty each of the multiple thermal compression tanks in sequence to maintain a flow of pressurized liquid fuel through to the combustor.

Optionally, and in accordance with any of the above, the thermal compression tank includes a gas outlet where vaporized fuel generated during heating of the liquid fuel is exhausted and communicated to the combustor.

Optionally, and in accordance with any of the above, the thermal compression tank is in thermal communication (or thermal contact) with the main storage tank to cool the thermal compression tank after the pressurized liquid fuel is exhausted from the thermal compression tank.

Optionally, and in accordance with any of the above, the turbine engine assembly further includes an intermediate loop with a working fluid that is in thermal communication (or thermal contact) with the thermal compression tank. The working fluid is heated by a heat source and communicates the thermal energy to the liquid fuel within the thermal compression tank.

According to another aspect of the present invention, there is provided a method of operating a turbine engine for an aircraft that includes, among other possible things, the steps of filling a thermal compression tank with a liquid fuel from a main storage tank at a cryogenic temperature, sealing the thermal compression tank with the liquid fuel, heating the liquid fuel within the thermal compression tank to raise a pressure of the liquid fuel to a pressure required for communication to a combustor, unsealing the thermal compression tank and communicating a pressurized liquid fuel flow into fuel passages that are directed toward the combustor, transforming the pressurized liquid fuel into a gas downstream of the thermal compression tank by heating in a heat exchanger, resealing the thermal compression tank once emptied of the pressurized liquid fuel, cooling the thermal compression tank until a pressure within the thermal compression tank is cooled to a predetermined temperature, and repeating the process by refilling the thermal compression tank with a quantity of liquid fuel from the main storage tank.

Optionally, and in accordance with any of the above, the method further includes the step of sequentially filling multiple thermal compression tanks to maintain a continuous and uniform flow of liquid fuel into the fuel passages to the combustor.

Optionally, and in accordance with any of the above, sequentially filling multiple thermal compression tanks includes filling a first thermal compression tank followed by filling of second thermal compression tank, that is in turn followed by filling of subsequent one of the multiple thermal compression tanks.

Optionally, and in accordance with any of the above, the method further includes heating and emptying the first thermal compression tank, the second thermal compression tank and the subsequent one of the thermal compression tanks to generate the flow of liquid fuel.

Although the different examples have the specific components shown in the illustrations, embodiments of this invention are not limited to those particular combinations. It is possible to use some of the components or features from one of the examples in combination with features or components from another one of the examples.

These and other features disclosed herein can be best understood from the following specification and drawings, the following of which is a brief description.

### BRIEF DESCRIPTION OF THE DRAWINGS

Figure 1 is a schematic view of an example aircraft turbine engine.
Figure 2 is a schematic view of an example aircraft fuel system in a first operating condition.
Figure 3 is a schematic view of the example aircraft fuel system shown in Figure 2 in a second operating condition.
Figure 4 is a schematic view of the example aircraft fuel system show in Figures 2 and 3 in a third operating condition.
Figure 5 is a schematic view of another example aircraft fuel system.
Figure 6 is a schematic view of yet another example aircraft fuel system.

### DETAILED DESCRIPTION

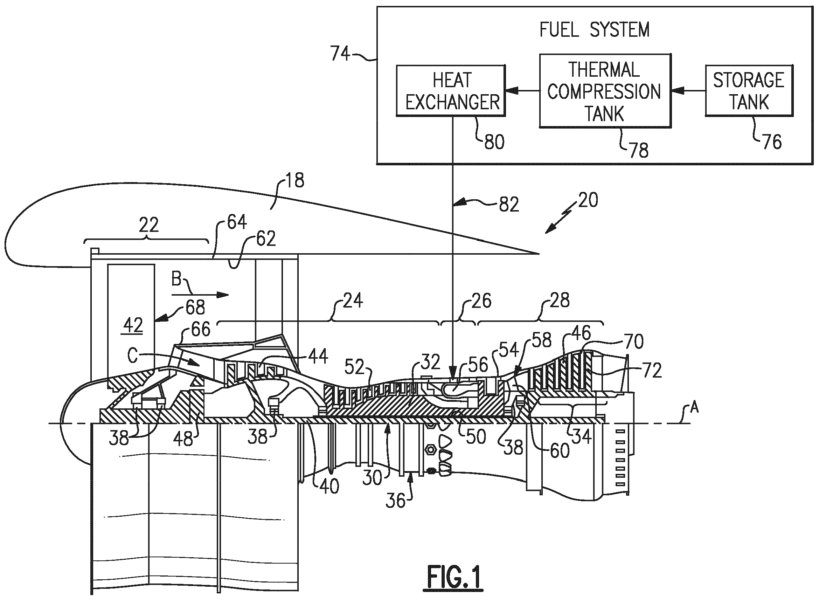

Figure 1 schematically illustrates a turbine engine 20 for use in an aircraft. A cryogenic fuel system 74 provides a flow of fuel 82 to a combustor 56. A cryogenic fuel in a liquid phase from a main storage tank 76 is pressurized by exposure to heat in a thermal compression tank 78 instead of use of a conventional fuel pump.

The turbine engine 20 is disclosed herein as a two-spool turbofan that generally incorporates a fan section 22, a compressor section 24, a combustor section 26 and a turbine section 28. The fan section 22 may include a single-stage fan 42 having a plurality of fan blades 68. The fan blades 68 may have a fixed stagger angle or may have a variable pitch to direct incoming airflow from an engine inlet. The fan 42 drives air along a bypass flow path B in a bypass duct 62 defined within a housing 64 such as a fan case or nacelle 18, and also drives air along a core flow path C for compression and communication into the combustor section 26 then expansion through the turbine section 28. A splitter 66 aft of the fan 42 divides the air between the bypass flow path B and the core flow path C. The housing 62 may surround the fan 42 to establish an outer diameter of the bypass duct 62. The splitter 66 may establish an inner diameter of the bypass duct 62.

Although depicted as a two-spool turbofan gas turbine engine in the disclosed nonlimiting embodiment, it should be understood that the concepts described herein are not limited to use with two-spool turbofans as the teachings may be applied to other types of turbine engines including three-spool architectures. Moreover, although an example fan section 22 within a nacelle is disclosed by way of example, the fan section may be of an open rotor architecture with a single fan stage, a dual fan stage and/or counterrotating fan stages all of which are within the scope and contemplation of this invention. Additionally, the engine 20 may incorporate a variable area nozzle for varying an exit area of the bypass flow path B and/or a thrust reverser for generating reverse thrust.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in the exemplary gas turbine engine 20 is illustrated as a geared architecture 48 to drive the fan 42 at a lower speed than the low speed spool 30. The inner shaft 40 may interconnect the low pressure compressor 44 and low pressure turbine 46 such that the low pressure compressor 44 and low pressure turbine 46 are rotatable at a common speed and in a common direction. In other embodiments, the low pressure turbine 46 drives both the fan 42 and low pressure compressor 44 through the geared architecture 48 such that the fan 42 and low pressure compressor 44 are rotatable at a common speed. Although this application discloses geared architecture 48, its teaching may benefit direct drive engines having no geared architecture.

The high speed spool 32 includes an outer shaft 50 that interconnects a second (or high) pressure compressor 52 and a second (or high) pressure turbine 54. A combustor 56 is arranged in the exemplary gas turbine 20 between the high pressure compressor 52 and the high pressure turbine 54. A mid-turbine frame 58 of the engine static structure 36 may be arranged generally between the high pressure turbine 54 and the low pressure turbine 46. The mid-turbine frame 58 further supports bearing systems 38 in the turbine section 28. The inner shaft 40 and the outer shaft 50 are concentric and rotate via bearing systems 38 about the engine central longitudinal axis A which is collinear with their longitudinal axes.

Airflow in the core flow path C is compressed by the low pressure compressor 44 then the high pressure compressor 52, mixed and burned with fuel in the combustor 56, then expanded through the high pressure turbine 54 and low pressure turbine 46. The mid-turbine frame 58 includes airfoils 60 which are in the core flow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and the fan 42 may be positioned forward or aft of the location of gear system 48.

In some embodiments, the fan section 22 may have at least 10 fan blades 68 but no more than 20 or 24 fan blades 68. In the disclosed examples, the fan 42 may have between 12 and 18 fan blades 68, such as for example 14 fan blades 68. An exemplary fan size measurement is a maximum radius between the tips of the fan blades 68 and the engine central longitudinal axis A. The maximum radius of the fan blades 68 can be at least 40 inches (102 cm), or more narrowly no more than 75 inches (191 cm). For example, the maximum radius of the fan blades 68 can be between 45 inches (114 cm) and 60 inches (152 cm), such as between 50 inches (127 cm) and 55 inches (140 cm). Another exemplary fan size measurement is a hub radius, which is defined as distance between a hub of the fan 42 at a location of the leading edges of the fan blades 68 and the engine central longitudinal axis A. The fan blades 68 may establish a fan hub-to-tip ratio, which is defined as a ratio of the hub radius divided by the maximum radius of the fan 42. The fan hub-to-tip ratio can be less than or equal to 0.35, or more narrowly greater than or equal to 0.20, such as between 0.25 and 0.30. The combination of fan blade counts and fan hub-to-tip ratios disclosed herein can provide the engine 20 with a relatively compact fan arrangement.

In other embodiments, such as in open rotor systems, the fan section 22 may have at least 5 blades 68 but no more than 12 blades 68. In such embodiments, the maximum radius of the fan blades 68 can be about 150 inches (381 cm).

The low pressure compressor 44, high pressure compressor 52, high pressure turbine 54 and low pressure turbine 46 each include one or more stages having a row of rotatable airfoils. Each stage may include a row of vanes adjacent the rotatable airfoils. The rotatable airfoils are schematically indicated at 72, and the vanes are schematically indicated at 70.

The low pressure compressor 44 and low pressure turbine 46 can include an equal number of stages. For example, the engine 20 can include a three-stage low pressure compressor 44, an eight-stage high pressure compressor 52, a two-stage high pressure turbine 54, and a three-stage low pressure turbine 46 to provide a total of sixteen stages. In other examples, the low pressure compressor 44 includes a different (e.g., greater) number of stages than the low pressure turbine 46. For example, the engine 20 can include a five-stage low pressure compressor 44, a nine-stage high pressure compressor 52, a two-stage high pressure turbine 54, and a four-stage low pressure turbine 46 to provide a total of twenty stages. In other embodiments, the engine 20 includes a four-stage low pressure compressor 44, a nine-stage high pressure compressor 52, a two-stage high pressure turbine 54, and a three-stage low pressure turbine 46 to provide a total of eighteen stages. It should be understood that the engine 20 can incorporate other compressor and turbine stage counts, including any combination of stages disclosed herein.

The engine 20 may be a high-bypass geared aircraft engine. It should be understood that the teachings disclosed herein may be utilized with various engine architectures, such as low-bypass turbofan engines, prop fan and/or open rotor engines, turboprops, turbojets, etc. The bypass ratio can be greater than or equal to 10.0 and less than or equal to about 18.0, or more narrowly can be less than or equal to 16.0.

The geared architecture 48 may be an epicyclic gear train, such as a planetary gear system or a star gear system. The epicyclic gear train may include a sun gear, a ring gear, a plurality of intermediate gears meshing with the sun gear and ring gear, and a carrier that supports the intermediate gears. The sun gear may provide an input to the gear train. The ring gear (e.g., star gear system) or carrier (e.g., planetary gear system) may provide an output of the gear train to drive the fan 42. A gear reduction ratio may be greater than or equal to 2.3, or more narrowly greater than or equal to 3.0, and in some embodiments the gear reduction ratio is greater than or equal to 3.4. The gear reduction ratio may be less than or equal to 4.0.

The fan diameter is significantly larger than that of the low pressure compressor 44. The low pressure turbine 46 can have a pressure ratio that is greater than or equal to 8.0 and in some embodiments is greater than or equal to 10.0. The low pressure turbine pressure ratio can be less than or equal to 13.0, or more narrowly less than or equal to 12.0. Low pressure turbine 46 pressure ratio is pressure measured prior to an inlet of low pressure turbine 46 as related to the pressure at the outlet of the low pressure turbine 46 prior to an exhaust nozzle. It should be understood, however, that the above parameters are only exemplary of one embodiment of a geared architecture engine and that the present invention is applicable to other gas turbine engines including direct drive turbofans. All of these parameters are measured at the cruise condition described below.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. The engine parameters described above, and those in the next paragraph are measured at this condition unless otherwise specified.

"Fan pressure ratio" is the pressure ratio across the fan blade 68 alone, without a Fan Exit Guide Vane ("FEGV") system. A distance is established in a radial direction between the inner and outer diameters of the bypass duct 62 at an axial position corresponding to a leading edge of the splitter 66 relative to the engine central longitudinal axis A. The fan pressure ratio is a spanwise average of the pressure ratios measured across the fan blade 68 alone over radial positions corresponding to the distance. The fan pressure ratio can be less than or equal to 1.45, or more narrowly greater than or equal to 1.25, such as between 1.30 and 1.40. "Corrected fan tip speed" is the actual fan tip speed in ft/sec divided by an industry standard temperature correction of [(Tram °R)/(518.7 °R)]^{0.5}. The corrected fan tip speed can be less than or equal to 1150.0 ft / second (350.5 meters/second), and can be greater than or equal to 1000.0 ft / second (304.8 meters/second).

The fan 42, low pressure compressor 44 and high pressure compressor 52 can provide different amounts of compression of the incoming airflow that is delivered downstream to the turbine section 28 and cooperate to establish an overall pressure ratio (OPR). The OPR is a product of the fan pressure ratio across a root (i.e., 0% span) of the fan blade 68 alone, a pressure ratio across the low pressure compressor 44 and a pressure ratio across the high pressure compressor 52. The pressure ratio of the low pressure compressor 44 is measured as the pressure at the exit of the low pressure compressor 44 divided by the pressure at the inlet of the low pressure compressor 44. In one example embodiment, a sum of the pressure ratio of the low pressure compressor 44 and the fan pressure ratio is between 3.0 and 6.0, or more narrowly is between 4.0 and 5.5. The pressure ratio of the high pressure compressor ratio 52 is measured as the pressure at the exit of the high pressure compressor 52 divided by the pressure at the inlet of the high pressure compressor 52. In one example embodiment, the pressure ratio of the high pressure compressor 52 is between 9.0 and 12.0, or more narrowly is between 10.0 and 11.5. The OPR can be equal to or greater than 45.0, and can be less than or equal to 70.0, such as between 50.0 and 60.0. The overall and compressor pressure ratios disclosed herein are measured at the cruise condition described above, and can be utilized in two-spool architectures such as the engine 20 as well as three-spool engine architectures.

The engine 20 establishes a turbine entry temperature (TET). The TET is defined as a maximum temperature of combustion products communicated to an inlet of the turbine section 28 at a maximum takeoff (MTO) condition. The inlet is established at the leading edges of the axially forwardmost row of airfoils of the turbine section 28, and MTO is measured at maximum thrust of the engine 20 at static sea-level and 86 degrees Fahrenheit (°F) (30 °C). The TET may be greater than or equal to 2700.0 °F (1482 °C), or more narrowly less than or equal to 3500.0 °F (1827 °C), such as between 2750.0 °F (1510 °C) and 3350.0 °F (1843 °C). The relatively high TET can be utilized in combination with the other techniques disclosed herein to provide a compact turbine arrangement.

The engine 20 establishes an exhaust gas temperature (EGT). The EGT is defined as a maximum temperature of combustion products in the core flow path C communicated to at the trailing edges of the axially aftmost row of airfoils of the turbine section 28 at the MTO condition. The EGT may be less than or equal to 1000.0 °F (538 °C), or more narrowly greater than or equal to 800.0 °F (428 °C), such as between 900.0 °F (482 °C) and 975.0 °F (524 °C), though lower EGTs are contemplated herein. The relatively low EGT can be utilized in combination with the other techniques disclosed herein to reduce fuel consumption.

The example engine 20 uses a cryogenic fuel stored in a liquid form in the main storage tank 76. The example fuel system 74 uses hydrogen that is stored in a liquid form in the storage tank 76. The liquid hydrogen is stored at temperatures of around 20° Kelvin (-424 °F) and at pressures of around 14.7 psia (101 kPa). The liquid hydrogen must be pressurized before communication to the combustor 56. A thermal compression tank 78 is included to pressurize the liquid hydrogen through the application of thermal energy. The output from the thermal compression tank 78 is a pressurized liquid hydrogen flow that is subsequently heated in a heat exchanger 80 before injection into the combustor 56. The thermal compression tank 78 is a batch process where a fixed quantity of liquid fuel is pressurized and extracted throughout a finite time period.

In one example embodiment, the cryogenic fuel is a hydrogen-based fuel. The hydrogen-based fuel may be hydrogen and/or be derived from hydrogen containing compounds such as ammonia. In another embodiment, the cryogenic fuel is a liquid oxygen. In another example embodiment, the cryogenic fuel is a liquid natural gas. It should be appreciated that although hydrogen, ammonia, oxygen, and liquid natural gas are disclosed by way of example, other cryogenic fuels could be utilized and are within the scope and contemplation of this invention.

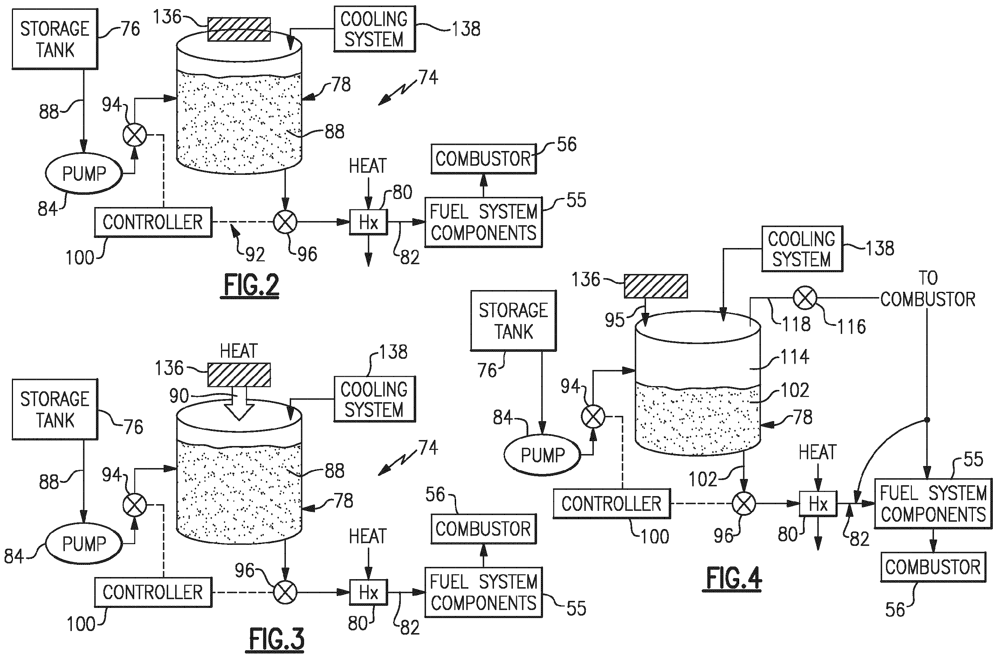

Referring to Figure 2, with continued reference to Figure 1, the example fuel system 74 is shown schematically and includes the main storage tank 76 that supplies a liquid fuel 88 to the thermal compression tank 78. A low pressure pump 84 is used to facilitate filling of the thermal compression tank 78. A valve system 92 is controlled by a controller 100 to control filling and sealing of the thermal compression tank 78. In one example embodiment, the valve system 92 includes an inlet control valve 94 and an outlet control valve 96. The inlet and outlet valves 94, 96 are operable to fill, seal and empty the liquid fuel from the thermal compression tank 78.

A heat control device 136 is associated with the thermal compression tank 78 for selectively communicating thermal energy. The heat control device 136 may be a heat exchanger that provides for communication of ambient heat, or a working fluid warmer than the liquid fuel temperature with the thermal compression tank 78. The heat control device 136 may also be a heat generating device that is electrically powered. Other devices that may be controlled to selectively impart heat into the thermal tank 78 could be used and are within the contemplation and scope of this invention.

The example controller 100 is a device and system for performing necessary computing or calculation operations of the valve system 92 and the heating device 136 as well as any other components of the fuel system 74. The example controller 100 may control the valve system 92 including the valves 94 and 96 and any other valves, actuators or control devices that control the flow of the liquid fuel. The controller 100 may be specially constructed for operation of the valve system 92, or it may comprise at least a general-purpose computer selectively activated or reconfigured by software instructions stored in a memory device. The controller 100 may further be part of full authority digital engine control (FADEC) or an electronic engine controller (EEC).

A heat exchanger 80 is provided downstream of the outlet control valve 96 to heat the liquid fuel prior to communication to the combustor 56. The heat exchanger 80 provides for communication of thermal energy into the fuel flow. The thermal energy may be provided from an exhaust gas flow, oil flow and/or other hot flows generated and available to the engine 20.

The thermal compression tank 78 is sized to provide a batch of pressurized fuel of a quantity that maintains a desired flow rate of fuel to the combustor 56. The desired flow rate may be provided by several thermal compression tanks 78 operated sequentially. The example fuel system 74 is shown schematically in Figure 1 and are not intended to indicate relative sizes or positions within the engine 10. Moreover, although a single storage tank 76, thermal compression tank 78, and heat exchanger 80 are shown schematically by example, multiples of each feature may be included and are within the contemplation of this invention. Moreover, the relative size of the storage tank 76, and the thermal compression tanks 78 are not depicted in the schematic representation. The thermal compression tank 78 may be larger or/smaller than the storage tank 76. The thermal compression tank 78 is sealable to facilitate compression upon exposure to thermal energy.

Figure 2 illustrates the thermal compression tank 78 in a first operating condition where liquid fuel 88 from the storage tank 76 is communicated to fill the thermal compression tank 78. In this first operating condition, the inlet valve 94 is open to fill the tank and the outlet valve 96 is closed to prevent outflow. A cooling system 138 is provided to cool the thermal compression tank 78. The cooling system 138 provides for maintaining the thermal compression tank 78at temperatures that maintain the liquid fuel 88 in a liquid phase.

Referring to Figure 3, with continued reference to Figure 2, the fuel system 74 is shown in a second operating condition where the liquid fuel 88 within the thermal compression tank 78 is heated. The cooling system 138 is turned off during the heating operation. Both the inlet valve 94 and the outlet valve 96 are closed to effectively seal the thermal compression tank 78. Thermal energy 90 is applied to the tank, causing vaporization of a small quantity of the liquid fuel. As the vapor content increases in the fixed volume of the tank 78, the pressure within the tank increases. This pressurization process continues until the tank reaches a required pressure for the aircraft fuel system. Throughout pressurization, most of the liquid fuel within the tank remains liquid.

Thermal energy 90 may be provided by any fluid flow of the engine 20. In one example embodiment, the thermal energy 90 is from an exhaust gas flow. Moreover, lubricant flow, bleed air flow, ambient air, or any other flows of temperature higher than the cryogenic fuel temperature from the engine 20 and/or the aircraft may be used for heating the liquid fuel.

Referring to Figure 4, with continued reference to Figures 2 and 3, the fuel system 74 in a third operating condition is schematically shown where pressurized liquid fuel 102 is extracted through the outlet valve 96. A controlled amount of heat indicated schematically at 95 is applied to maintain pressure within the tank 78 to drive outflow through the outlet valve 96. The inlet valve 94 remains closed such that the pressurized liquid fuel 102 is driven through the outlet valve 96 and through the heat exchanger 80. The applied heat 95 maintains a minimal pressure within the tank 78 that is required to provide the driving force to communicate the liquid fuel 102 through the heat exchanger 80, any subsequent fuel system components 55, and into the combustor 56.

The heat exchanger 80 heats the liquid fuel 102 to change phase into a substantially vapor fuel flow 82 that is suitable for communication into the combustor 56. In one example embodiment, the pressurized liquid fuel is at a temperature of around 30° Kelvin (-406 °F) and a pressure of around 1000 psia (6895 kPa).

Following the extraction of liquid fuel, the tank 78 must be cooled to reduce the pressure in the tank back to the pressure of the main storage tank. Accordingly, the cooling system 138 is activated to cool the thermal compression tank 78 to temperatures that maintain the fuel in a liquid form. The example cooling system 138 may provide thermal communication with the main storage tank to passively absorb the heat load. Alternatively, the example cooling system may be an active cryogenic cooling system operable as needed to cool the storage tank to temperatures compatible with liquid fuel.

During the application of heat, some of the fuel will have transformed into a vapor 114. In one embodiment, this vapor is cooled and condensed back to liquid via a thermal communication with the main storage tank. In another embodiment, the vapor is actively cooled and condensed back to liquid via an onboard cryo-cooling system. In another embodiment, the vapor 114 is exhausted from the tank 78 through a vapor passage 118 that is separate from the passage for the pressurized liquid fuel 102. A vapor control valve 116 is provided to control flow of the vapor 114 and enable sealing of the tank during heating. The vapor 114 may be communicated directly to the combustor 56, either separately or in combination with the vapor fuel flow 82 from the heat exchanger 80. Alternatively, the vapor 114 may be routed back to the main storage tank where it will condense when joined with the liquid fuel stored.

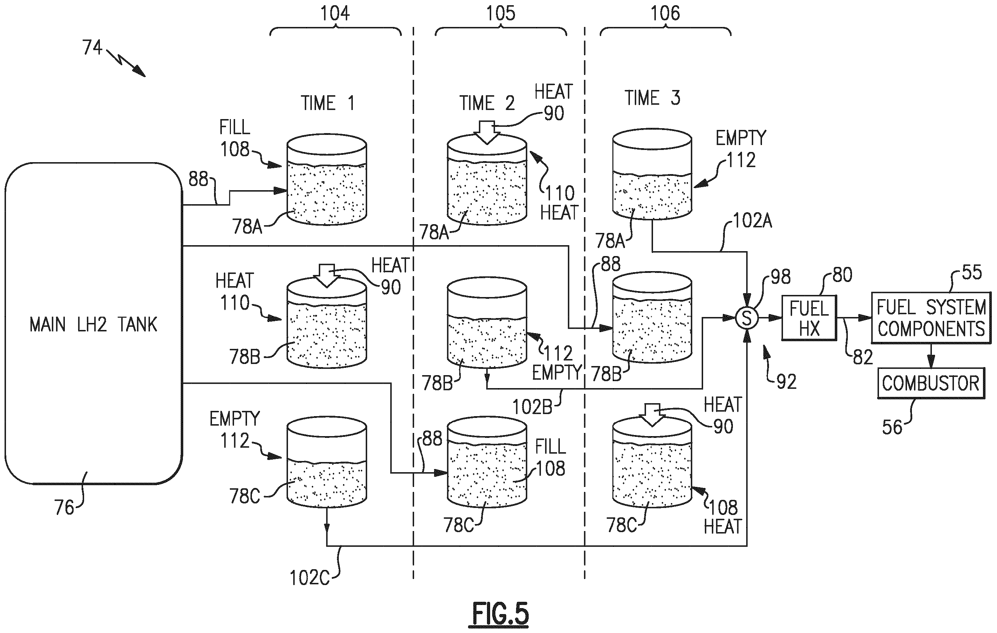

Referring to Figure 5, the fuel system 74 is shown schematically with several thermal compression tanks 78A-C that are operated concurrently and sequentially to maintain a uniform fuel flow to the combustor. Each tank 78A-C is progressed through the filling 108, heating 110, and emptying 112 steps in alternating periods such that one tank is always providing a fuel flow toward the combustor 56. While three tanks are shown in this example, it is understood that two tanks or a number greater than three may be operated in the same manner.

The inlet valve 94 and outlet valve 96 for each tank 78A-C is removed for clarity in Figure 5 to concentrate on operation of the multiple tanks 78A-C. It should be appreciated that an inlet valve 94 and an outlet valve 96 would be associated with each tank 78A-C to facilitate filling, sealing, and emptying of each tank 78A-C. Moreover, the valve system 92 may include additional valves, fluid control devices and flow structures as may be necessary to transport, control and move the liquid fuel.

Similarly, the heating device 136 is not shown in Figure 5 for clarity. However, each of the tanks 78A-C would include a heating device 136 to facilitate heating at appropriate times during operation.

**In** one disclosed operational embodiment, during a first time period indicated at 104, a first tank 78A is being filled, a second tank 78B is sealed and being heated, and a third tank 78C is emptying pressurized fuel 102C toward the combustor 56. Accordingly, in the first time period 104, the first tank 78A is in the first operating condition of being filled with liquid fuel from the storage tank 76, the second tank 78B is in the second operating condition of being heated, and the third tank 78C is in the third operating condition of communicating the pressurized fuel to the combustor.

A splitter valve or valve system 98 is provided as part of the disclosed valve system 92 to accept and direct pressurized fuel flows from each of the tanks 78A-C. The splitter valve 98 is shown schematically and may be one single device or several valve devices that provide for the communication of the pressurized fuel while preventing back flows into or toward other tanks. The splitter valve or system 98 may be a passive device such as a combination of check valves or may be actively controlled to correspond with operation of each tank 78A-C.

A second time period 105 illustrates advancement of operation for each of the tanks 78A-C. During the second time period 105, the first tank 78A is being heated, the second tank 78B is being emptied, and the third tank 78C is being filled. A pressurized liquid fuel flow 102B is communicated to the splitter valve 98.

A third time period 106 illustrates further advancement of operation of each of the tanks 78A-C. During the third time period 106, the first tank 78A is being emptied, the second tank 78B is being filled, and the third tank 78C is being heated. Accordingly, by the third time period 106, each of the tanks 78A-C has progressed through each of the first, second and third operating conditions of filling, heating, and emptying of the liquid fuel. A first pressurized liquid fuel flow 102A is communicated to the splitter valve 98. Operation will then repeat with each tank moving sequentially through a filling, heating, and emptying of liquid fuel.

The pace at which each operation is conducted may vary based on engine operating conditions. During periods of higher fuel demand, each of the time periods 104, 105 and 106 may be adjusted to increase fuel flow. Similarly, during periods of lower fuel demand, the time periods 104, 105 and 106 may be increased.

Although three thermal compression tanks 78A-C are disclosed by way of example, other numbers of thermal compression tanks 78A-C may be utilized and are within the contemplation of this invention. Moreover, the size of each of the compression tanks 78A-C may be the same or be of different sizes to adapt fuel pressurization to application specific needs. Furthermore, more than one set of thermal compression tanks 78A-C may be used and operated in different combinations of operating conditions and time periods to meet fuel demands during engine operation.

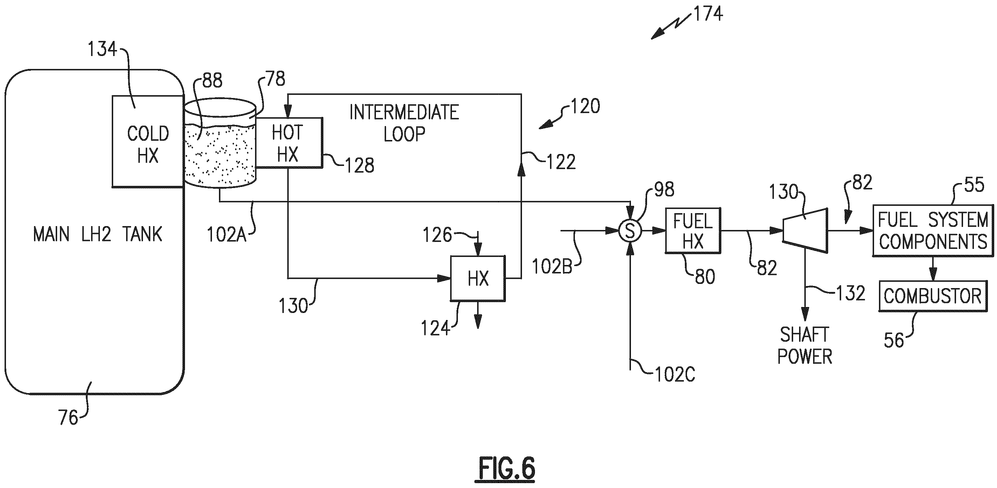

Referring to Figure 6, another example fuel system embodiment 174 is schematically shown and includes an intermediate loop 120 with a working fluid 122 for communicating thermal energy to the thermal compression tank 78. In one example embodiment, the working fluid may be any fluid capable of transferring thermal energy into the liquid fuel within the thermal compression tank 78. The intermediate loop 120 includes a first heat exchanger 124 where a heat flow 126 imparts thermal energy into the working fluid flow 122. A second heat exchanger 128 is in thermal communication with the thermal compression tank 78. In this embodiment, the heat exchanger 128 corresponds to the heating device 136 in figure 2. This heat exchanger 128 communicates thermal energy from the working fluid into the liquid fuel 88 within the tank 78. The intermediate loop 120 provides for the recovery and use of thermal energy from systems and heat sources that may not be compatible with exposure to the cryogenic fuel. Moreover, the intermediate loop 120 provides additional options for locating and operating the example fuel system 174.

The thermal compression tank 174 is kept at cryogenic temperatures and therefore is disposed in thermal communication contact with the main storage tank 76. A cold heat exchanger 134 may be utilized to communicate cooling temperature to the thermal compression tank 78. The thermal compression tank 174 is therefore passively cooled after the emptying operating condition by the thermal contact with the main storage tank 76. **In** another embodiment, this cooling may be performed by a devoted cooling system.

The example fuel system 174 further includes a turboexpander 130 disposed downstream of the fuel heat exchanger 80. Vaporized fuel flow 82 is expanded through the turboexpander 130 to produce shaft power 132. The shaft power 132 may be utilized to drive accessory components of the engine or aircraft. Moreover, expansion of the vaporized fuel 82 through the turboexpander 130 may provide conditioning of the vaporized fuel to a temperature and pressure suitable for injection into the combustor 56. Other variations of heat exchangers, turbines, and other components existing downstream of the thermal tank system are within the contemplation of this invention.

Accordingly, the disclosed fuel system embodiments 74, 174 provides an alternate means of pressurizing cryogenic fuels in a liquid form without the use of cryogenic liquid pumps.

Although an example embodiment has been disclosed, a worker of ordinary skill in this art would recognize that certain modifications would come within the scope of this invention. For that reason, the following claims should be studied to determine the scope and content of this invention.

## Claims

1. A fuel delivery system (74;174) for an aircraft turbine engine assembly, the fuel delivery system (74) comprising:
a storage tank (76) configured for storage of a cryogenic fuel in a liquid phase;
at least one thermal compression tank (78;78A,78B,78C) in which liquid fuel from the storage tank (76) is pressurized by exposure to thermal energy to elevate a pressure of the liquid fuel;
a heat communication device (136;128) in thermal contact with the thermal compression tank (78... 78C) for communicating thermal energy to the liquid fuel within the thermal compression tank (78);
a valve system (92) for controlling the flow of liquid fuel into and out of the thermal compression tank (78... 78C); and
a controller (100) programmed to operate the valve system (92) to release pressurized liquid fuel (102;102A,102B,102C) from the thermal compression tank (78... 78C) into a conduit for communication to a combustor (56).

2. The fuel delivery system (74;174) as recited in claim 1, wherein the controller (100) is further programmed to operate the valve system (92) to seal the liquid fuel within the thermal compression tank (78... 78C) for pressurizing the liquid fuel.

3. The fuel delivery system (74;174) as recited in claim 1 or 2, further comprising a heat exchanger (80) downstream of the thermal compression tank (78... 78C) configured to provide thermal energy to the pressurized liquid fuel (102... 102C) to transform the pressurized liquid fuel (102... 102C) into a gas,
optionally before being communicated to the combustor (56).

4. The fuel delivery system (74;174) as recited in claim 1, 2 or 3, wherein the at least one thermal compression tank (78... 78C) comprises multiple thermal compression tanks (78... 78C) and the valve system (92) comprises a switching valve (98) for controlling the flow of pressurized liquid fuel (102... 102C) from each of the multiple thermal compression tanks (78... 78C).

5. The fuel delivery system (74;174) as recited in claim 4, wherein the controller (100) is further programmed to fill, pressurize, and empty each of the multiple thermal compression tanks (78... 78C) in sequence to maintain a flow of fuel to the combustor (56).

6. The fuel delivery system (74) as recited in any preceding claim, wherein the thermal compression tank (78) includes a gas outlet (118) through which vaporized fuel (114) generated during heating of the liquid fuel is exhausted and communicated to the combustor (56).

7. The fuel delivery system (74) as recited in any of claims 1 to 5, wherein the thermal compression tank (78) includes a gas outlet (118) through which vaporized fuel (114) generated during heating of the liquid fuel is exhausted and communicated to the storage tank (76).

8. The fuel delivery system (174) as recited in any preceding claim, wherein the thermal compression tank (78) is in thermal contact with the storage tank (76) such that the thermal compression tank (78) is cooled after the pressurized liquid fuel (102A) is extracted from the thermal compression tank (78).

9. The fuel delivery system (74) as recited in any of claims 1 to 7, further comprising a cooling system (138) configured to cool the thermal compression tank (78) after the pressurized liquid fuel (102) is extracted from the thermal compression tank (78).

10. The fuel delivery system (174) as recited in any preceding claim, further comprising an intermediate loop (120) having a working fluid (122) in thermal contact with the thermal compression tank (78), wherein the working fluid (122) is heated by a heat source (126) and communicates thermal energy to the liquid fuel within the thermal compression tank (78).

11. A turbine engine assembly for an aircraft comprising:
a core engine including a propulsor (42), a compressor section (24) for compressing an inlet airflow and communicating it to a combustor (56), in which fuel is mixed with the compressed inlet airflow and ignited to generate an exhaust gas flow that is expanded through a turbine section (28) to drive the propulsor (42) and the compressor section (24); and
the fuel delivery system (74;174) of any preceding claim.

12. A method of operating a turbine engine for an aircraft comprising the steps of:
filling a thermal compression tank (78;78A,78B,78C) with a liquid fuel from a main storage tank (76) at a cryogenic temperature;
sealing the thermal compression tank (78... 78C) comprising the liquid fuel;
heating the liquid fuel within the thermal compression tank (78... 78C) to raise a pressure of the liquid fuel to a pressure required for communication to a combustor (56);
unsealing the thermal compression tank (78... 78C) and communicating a pressurized liquid fuel flow (102;102A,102B,102C) into fuel passages directed toward the combustor (56);
transforming the pressurized liquid fuel (102... 102C) into a gas downstream of the thermal compression tank (78... 78C) by heating in a heat exchanger (80);
resealing the thermal compression tank (78... 78C) once emptied of the pressurized liquid fuel (102... 102C);
cooling the thermal compression tank (78... 78C) until a temperature within the thermal compression tank (78... 78C) is cooled to a predetermined temperature; and
repeating the process by refiling the thermal compression tank (78... 78C) with a quantity of liquid fuel from the main storage tank (76).

13. The method as recited in claim 12, further including the step of sequentially filling multiple thermal compression tanks (78... 78C) to maintain a continuous and uniform flow of liquid fuel into the fuel passages to the combustor (56).

14. The method as recited in claim 13, wherein sequentially filling multiple thermal compression tanks (78... 78C) comprises filling a first thermal compression tank (78A) followed by filling of second thermal compression tank (78C), that is in turn followed by filling of a subsequent one of the multiple thermal compression tanks (78... 78C).

15. The method as recited in claim 14, further including heating and emptying the first thermal compression tank (78A), the second thermal compression tank (78C) and the subsequent one of the thermal compression tanks (78... 78C) to generate the flow of liquid fuel.
